# EUROPEAN PATENT APPLICATION

(11) **EP 4 391 122 A1**
(43) Date of publication of application: **26.06.2024**
(21) Application number: 21951152.4
(22) Date of filing: 26.07.2021
(51) Int. Cl.: H01M 8/0286

(54) **METHOD FOR MANUFACTURING FUEL CELL AND CORRESPONDING FUEL CELL**

(71) Applicant: Robert Bosch GmbH, 70442 Stuttgart (DE)
(72) Inventor: HAO, Xiaogang, Shanghai 200335 (CN); XIE, Xu, Shanghai 200335 (CN); ZHANG, Jingjun, Shanghai 200335 (CN)
(74) Representative: Isarpatent
(86) International application number: PCT/CN2021/108397
(87) International publication number: WO 2023/004533

(57) **Abstract**

The present invention relates to a method for manufacturing a fuel cell, comprising a membrane electrode assembly, a sealing frame surrounding the membrane electrode assembly, and bipolar plates. The method includes the following steps: placing a prepared membrane electrode assembly into a pre-designed mold; injecting a sealing material composed of a first component and a second component into the mold and cooling it to solidify, thereby forming the sealing frame. The sealing frame has an inner peripheral region and an outer peripheral region, wherein the first component in the inner peripheral region has a first proportion different from a second proportion of the second component in the outer peripheral region; assembling the bipolar plates on both sides of the membrane electrode assembly and the sealing frame. The invention also relates to a corresponding fuel cell, which enables cost-effective and rapid mass production, while improving moldability and mechanical strength.

## Description

### Technical Field

The present invention relates to a method for manufacturing fuel cells. Additionally, the present invention relates to a corresponding fuel cell.

### Background Art

In recent years, with the development of society and the economy, there has been increasing concern about issues such as air pollution and energy consumption. Fuel cells are highly efficient power generation devices that directly convert the chemical energy in fuel and oxidizing agents into electrical energy through an electrochemical reaction without combustion. Due to the production of water as the main reaction byproduct and minimal emission of harmful gases, fuel cells have significant advantages in terms of clean and environmentally friendly power generation, especially in the field of vehicles.

To ensure the safety and high efficiency of fuel cells, the proper sealing of fuel cells is necessary. However, in existing fuel cells, the sealing process during assembly is not only difficult but may also adversely affect the functionality of the vital membrane electrode assembly or the mechanical strength of the entire fuel cell. Moreover, existing fuel cells fail to meet the required sealing performance under conditions of low temperature, severe vibrations, or aging.

### Summary of the Invention

Therefore, the purpose of the present invention is to propose an improved method for manufacturing fuel cells. This method simplifies the assembly of the fuel cell's sealing components and the manufacturing of the fuel cell, enabling cost-effective and rapid mass production of fuel cells. Additionally, the method enhances the moldability and mechanical strength of the sealing components. Furthermore, the fuel cells manufactured using this method may maintain their sealing performance even under extreme conditions such as low temperature or extensive aging. The present invention also aims to provide a corresponding fuel cell.

In one aspect of the present invention, a method for manufacturing fuel cells is provided. The fuel cell comprises at least a membrane electrode assembly, bipolar plates, and a sealing frame surrounding the membrane electrode assembly. The method includes the following steps:
S1: Placing a prepared membrane electrode assembly in a pre-designed mold.
S2: Injecting a liquid sealant material comprising a first component and a second component into the mold and cooling it to solidify, forming the sealing frame. The sealing frame has an inner peripheral region and an outer peripheral region, with the first component present in the inner peripheral region in a first proportion different from a second proportion of the second component in the outer peripheral region.
S3: Assembling the bipolar plates on both sides of the membrane electrode assembly and the sealing frame.

According to the present invention, the membrane electrode assembly is placed in the mold, and the sealing frame is directly formed around it, eliminating the need for additional assembly steps and ensuring a reliable sealing connection between the membrane electrode assembly and the sealing frame. The injection molding of the sealing frame may be carried out in a cost-effective and time-efficient manner, significantly reducing the production costs and assembly complexity of the entire fuel cell, and is particularly beneficial for mass production. Furthermore, by using a two-component injection molding process with the sealant material comprising the first and second components and adjusting the proportion of the first component to the second component in different regions of the sealing frame, it is possible to tailor the characteristics of various regions of the sealing frame, such as moldability and mechanical strength, in a targeted manner. This effectively ensures the safety and efficiency of the fuel cell while avoiding adverse effects on the functionality of the membrane electrode assembly.

The second aspect of the present invention discloses a fuel cell that is manufactured using the method of the present invention. The fuel cell comprises at least the following components:
- Membrane electrode assembly;
- Sealing frame surrounding the membrane electrode assembly, the sealing frame being formed by injection molding of a sealing material composed of a first component and a second component and having an inner peripheral region and an outer peripheral region;
- Bipolar plates arranged on both sides of the membrane electrode assembly and the sealing frame, wherein a first proportion of the first component in the inner peripheral region is different from a second proportion of the second component in the outer peripheral region.

### Description of the Drawings

The following description of the present invention is provided with reference to the drawings to better understand the principles, features, and advantages of the present invention. The drawings include:
FIG. 1 illustrates a schematic view of an exemplary embodiment of the fuel cell according to the present invention.
FIG. 2 illustrates a partial sectional view of an exemplary embodiment of the fuel cell according to the present invention.
FIG. 3 illustrates a flowchart of a method for manufacturing the fuel cell according to an exemplary embodiment of the present invention.
FIG. 4 illustrates a curve graph depicting the proportion of the first component to the second component in the method for manufacturing the fuel cell according to an exemplary embodiment of the present invention.

### Specific Embodiments

To provide a clearer understanding of the technical problems, technical solutions, and beneficial technical effects addressed by the present invention, the following detailed description will be combined with the drawings and multiple exemplary embodiments. It should be understood that the specific embodiments described here are only intended to explain the present invention and not to limit the invention's scope of protection. For brevity, components with the same reference numerals in the drawings are only labeled once.

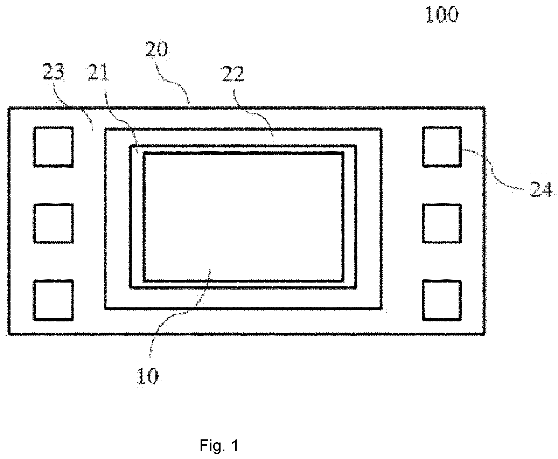

FIG. 1 illustrates a schematic diagram of an exemplary embodiment of a fuel cell 100 according to the present invention. Here, the fuel cell 100 is exemplified as a proton exchange membrane fuel cell and is particularly used as a power source in vehicles.

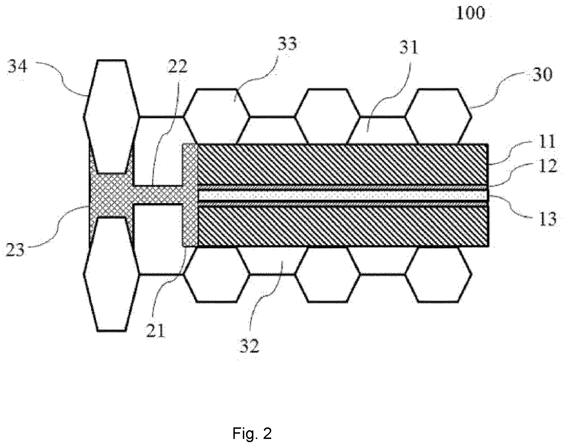

As shown in FIG. 1, the fuel cell 100 exemplarily comprises a membrane electrode assembly 10, a sealing frame 20 surrounding the membrane electrode assembly 10, and bipolar plates 30 (see FIG. 2). Additionally, the fuel cell 100 includes unillustrated end plates and fixtures, with the end plates abutting the two ends of the fuel cell and providing protection, and the fixtures configured to hold the components of the fuel cell 100 together. These components are collectively assembled to form the fuel cell stack.

Here, the membrane electrode assembly 10 is the core component of the fuel cell 100 and is exemplified as composed of a gas diffusion layer 11, a catalyst layer 12, and a proton exchange membrane 13 (see FIG. 2). In this configuration, gaseous fuel, typically hydrogen gas, supplied through the bipolar plates 30 reaches the anode catalyst layer via the gas diffusion layer 11. Under the catalytic action of the anode catalyst, such as platinum, the fuel decomposes into hydrogen ions and releases two electrons. The hydrogen ions then pass through the proton exchange membrane 13 to reach the cathode, where under the action of the cathode catalyst, they react with the oxidizing agent, such as air or pure oxygen, supplied to the cathode catalyst layer through the gas diffusion layer 11 on the other side to generate water, while the released electrons form an electric current in the external circuit. Here, the membrane electrode assembly 10 is located in the active region of the fuel cell 100.

To ensure the safe and efficient operation of the fuel cell 100, a sealing component is indispensable to prevent leakage of the supplied fuel and oxidizing agent. In conventional fuel cells, the sealing component is usually separately constructed and requires additional steps for assembly, such as bonding the sealing component with other components using fluororubber. In such cases, not only does the manufacturing process become more complex and time-consuming, but the sealing effectiveness may significantly decrease under extreme conditions, such as low temperatures (below -10°C), severe vibrations, or aging, leading to leakages.

In contrast, in the fuel cell 100 according to the present invention, the sealing component is constructed by injection molding a sealing material composed of a first component and a second component, forming a sealing frame 20. The sealing frame is divided into the successive and adjacent inner peripheral region 21, transition region 22, and outer peripheral region 23 from the inside to the outside. The inner peripheral region 21 adjoins the active region where the membrane electrode assembly 10 is located and the sealing material of the inner peripheral region 21 firmly adheres to the outer side of the membrane electrode assembly 10. The outer peripheral region 23 is situated facing away from the inner peripheral region 21 in the main extension plane of the membrane electrode assembly 10, while the transition region 22 is disposed between the inner peripheral region 21 and the outer peripheral region 23. In this context, the first component in the sealing material changes from a first proportion P1 in the inner peripheral region 21 to a second proportion P2 in the outer peripheral region 23, passing through the transition region. In the framework of the present invention, the terms "first component" and "second component" both refer to the materials used for injection-molding the sealing frame 20, which are heated and liquefied, then injected into the molding die, and formed by being solidified upon cooling. Here, different injection-molding components have distinct material properties, such as moldability, mechanical strength, and thermal conductivity. By adjusting the proportion P between the first and second components, different material properties may be achieved in various regions of the sealing frame 20, optimizing the functionality in each region in a targeted manner. This approach ensures both the sealing performance and the load-bearing capacity of the sealing frame 20 while avoiding adverse effects on the membrane electrode assembly 10. Furthermore, the gradual and particularly linear change from the first proportion P1 to the second proportion P2 through the transition region 22 enables a smooth transition in performance between different regions of the sealing frame, avoiding compatibility issues caused by sudden changes in component proportions. Of course, if necessary, the transition region 22 may be eliminated, and the inner peripheral region 21 and the outer peripheral region 23 may be directly adjacent.

Exemplarily, a plurality of manifolds 24 are arranged in the outer peripheral region 23 of the sealing frame 20. These manifolds are respectively used for: supplying hydrogen to the anode, discharging excess hydrogen, supplying air to the cathode, discharging excess air or product water, supplying the cooling agent to the membrane electrode assembly 10, and discharging the cooled cooling agent. Exemplarily, in the transition region 22, drain channels (not shown here) are provided to guide hydrogen, air, or cooling agent. The drain channels are connected to corresponding manifolds and lead to corresponding parts of the membrane electrode assembly 10.

Exemplarily, the first component is silicon rubber, and the second component is selected from one or more of the following materials: ethylene-propylene-diene monomer rubber (EPDM), polyethylene naphthalate (PEN), polyethylene terephthalate (PET), polyimide (PI), etc. Here, silicon rubber has a relatively low curing temperature or liquefaction temperature and exhibits excellent low-temperature resistance and thermal conductivity. On the other hand, materials used for the second component, such as EPDM or PEN, possess high mechanical strength, good aging resistance, and corrosion resistance, but they have relatively higher curing temperatures. Alternatively, other materials that are considered meaningful by those skilled in the art may be used as the first component or second component. By adjusting the proportion of silicon rubber as the first component relative to, for example, EPDM as the second component, desired curing temperature, mechanical strength, and aging resistance may be achieved.

Specifically, since the membrane electrode assembly 10, especially the proton exchange membrane, cannot withstand high temperatures without significantly affecting its functionality, the inner peripheral region 21 of the sealing frame 20, adjacent to the membrane electrode assembly 10, requires a lower forming temperature or curing temperature to avoid damaging the membrane electrode assembly 10. In this scenario, an increase in the amount or proportion of silicon rubber, serving as the first component, in the inner peripheral region 21 helps maintain the curing temperature of the sealing material at a relatively low level. Moreover, a higher amount of silicon rubber enhances the thermal conductivity of the inner peripheral region 21 and efficiently dissipates the heat generated during electrochemical reactions. Conversely, the outer peripheral region 23 of the sealing frame 20, situated on the outer side of the fuel cell 100 facing away from the inner peripheral region 21 and subjected to pressure loads transmitted by the bipolar plates 30, requires sealing material with greater mechanical strength to provide adequate support. Additionally, the material surrounding the manifolds 24 in the outer peripheral region 23 also needs to exhibit strong corrosion resistance and aging resistance. In this scenario, an increase in the amount of, for example, EPDM or PEN as the second component in the outer peripheral region 23 contributes to enhancing its mechanical strength, corrosion resistance, and aging resistance. Here, the first proportion P1 of the sealing material in the inner peripheral region 21 is greater than the second proportion P2 in the outer peripheral region 23, thereby selectively enhancing the moldability of the sealing frame 20 in the inner peripheral region 21 and the mechanical strength and corrosion resistance in the outer peripheral region 23. As a result, the functions of various regions of the sealing frame 20 are comprehensively and optimally implemented.

FIG. 2 shows a partial sectional view of a fuel cell 100 according to an exemplary embodiment of the present invention.

As shown in FIG. 2, the fuel cell 100 includes a membrane electrode assembly 10, a sealing frame 20, and bipolar plates 30. The sealing frame 20 surrounds the membrane electrode assembly 10, and the two bipolar plates 30 are respectively assembled on both sides of the membrane electrode assembly 10 and the sealing frame 20, sandwiching them in the middle.

As shown in FIG. 2, the membrane electrode assembly 10 is composed of two gas diffusion layers 11 and two catalyst layers 12 located on the anode side and cathode side, and a proton exchange membrane 13 located in the middle. Here, the catalyst layers 12 and the proton exchange membrane 13 may be constructed as a catalyst-coated membrane (CCM).

As shown in FIG. 2, the bipolar plates 30 are composed of two thin plates, such as metal plates, joined together and are exemplarily stamped to form flow channel structures, namely, a hydrogen gas flow channel 31 for the anode, an air flow channel 32 for the cathode, and a cooling agent flow channel 33. Through these channels, the gases may be evenly distributed to the reaction layers of the membrane electrode assembly 10 for electrochemical reactions and efficient heat dissipation.

Exemplarily, the bipolar plates 30 are also equipped with bead structures 34. The bead structures have protrusions relative to the main extension plane of the bipolar plates 30 and press against the sealing frame 20 by way of the protrusions, thus achieving sealing between the sealing frame 20 and the bipolar plates 30. The bead structures 34 may also be stamped and feature cavities between the two thin plates. Here, the bead structures 34 have elasticity and allow a certain degree of deformation, thus effectively cushioning pressure. Exemplarily, the bead structures 34 may be arranged at positions corresponding to the outer peripheral region 23 of the bipolar plates 30 to prevent external fluid leakage from the fuel cell. Additionally, it is also possible to consider arranging the bead structures 34 around the manifolds 24, which may better guide the fluid discharged from the manifolds 24 and prevent fluid leakage. Here, the manifolds 24 are exemplarily connected to the drain channels disposed in the transition region 22 and lead to the flow channel structures of the bipolar plates 30.

Exemplarily, the sealing frame 20 has recessed portions at positions corresponding to the bead structures 34, matching the contours of protrusions of the bead structures 34, thereby achieving high sealing stability without the need for adhesives, even under low temperatures, severe vibrations, or aging, ensuring the sealing between the sealing frame 20 and the bipolar plates 30.

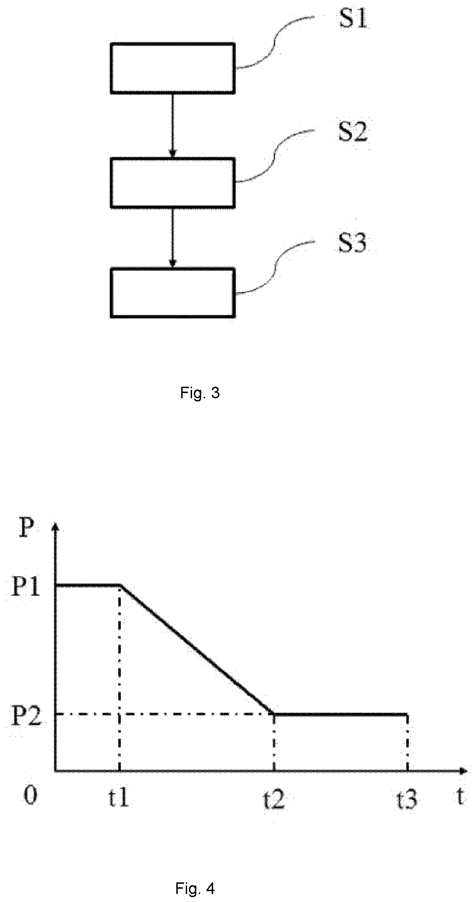

FIG. 3 illustrates a process for manufacturing a fuel cell 100 according to an exemplary embodiment of the present invention.

As shown in FIG. 3, the method comprises the following steps:
S1: placing a prepared membrane electrode assembly 10 in a pre-designed mold.
S2: injecting a liquid sealing material composed of a first component and a second component into the mold and cooling it to solidify, thereby forming a sealing frame 20. The sealing frame has an inner peripheral region 21 and an outer peripheral region 23, wherein a first proportion P1 of the first component in the inner peripheral region 21 differs from a second proportion P2 of the second component in the outer peripheral region 23.
S3: assembling bipolar plates 30 on the membrane electrode assembly 10 and the sealing frame 20.

Exemplarily, in step S1, the membrane electrode assembly 10 is prepared as follows: the gas diffusion layer 11, catalyst layer 12, and proton exchange membrane 13 are cut to the same extended dimensions. Additionally, it may be contemplated to construct the catalyst layer 12 and proton exchange membrane 13 as a catalyst-coated film, thereby simplifying the assembly of the membrane electrode assembly 10.

Exemplarily, in step S2, the sealing material is sequentially injected into the regions of the sealing frame 20 from the inside to the outside in chronological order, where the proportion P of the first component to the second component changes as the injection time progresses. For instance, the sealing material with the first proportion P1 is first injected into the inner peripheral region 21 of the sealing frame 20, followed by the injection of the sealing material with the second proportion P2 into the outer peripheral region 23 of the sealing frame 20, with the first proportion being greater than the second proportion. Furthermore, it may be considered to design a transition region 22 between the inner peripheral region 21 and the outer peripheral region 23, where the component proportion of the sealing material gradually and particularly linearly decreases in the transition region, as shown in FIG. 4.

Exemplarily, in step S2, the sealing frame 20 is configured to match the contours of protrusions of a bead structure 34 at corresponding locations where the bipolar plates 30 are to be subsequently assembled. That is, depressions are formed to receive protrusions at the locations corresponding to the bead structure 34. Thereafter, in step S3, when assembling the bipolar plates 30 on the sealing frame 20, the bead structure 34 may be received in the depressions in a shape-matching manner. This enhances the sealing effect between the sealing frame 20 and the bipolar plates 30 and allows for the possible elimination of the use of adhesives when necessary.

FIG. 4 shows a curve graph of the proportion P of the first component to the second component in a method for manufacturing a fuel cell 100 according to an exemplary embodiment of the present invention.

As shown in FIG. 4, the vertical axis represents the proportion P of the first component to the second component of the sealing material, while the horizontal axis represents the injection time t. In this embodiment, during the time period from the start of the injection process to t1, a sealing material having the first proportion P1 is injected into the inner peripheral region 21 of the sealing frame 20, then during the time period from t1 to t2, the sealing material is injected into the transition region 22 of the sealing frame 20, and the proportion P of the first component to the second component of the sealing material is linearly reduced from P1 to P2. Finally, during the time period from t2 to t3, a sealing material having the second proportion P2 is injected into the outer peripheral region 23 of the sealing frame 20. Here, P1 is less than or equal to 1, and P2 is greater than or equal to 0.

The foregoing description of embodiments only describes the present invention within the framework of the examples. Certainly, as long as it is technically meaningful, the various features of the embodiments may be freely combined with each other without departing from the framework of the present invention.

For those skilled in the art, other advantages and alternative embodiments of the present invention are apparent. Therefore, in terms of its broader significance, the present invention is not limited to the specific details, representative structures, and exemplary embodiments shown and described. On the contrary, those skilled in the art may make various modifications and substitutions without departing from the essential spirit and scope of the present invention.

## Claims

1. A method for manufacturing a fuel cell (100), wherein the fuel cell comprises at least a membrane electrode assembly (10), a sealing frame (20) surrounding the membrane electrode assembly (10), and bipolar plates (30), the method includes the following steps:
S1: placing a prepared membrane electrode assembly (10) into a pre-designed mold.
S2: injecting a liquid sealing material composed of a first component and a second component into the mold and cooling it to solidify, thus forming the sealing frame (20), the sealing frame comprises an inner peripheral region (21) and an outer peripheral region (23), wherein a first proportion (P1) of the first component in the inner peripheral region (21) differs from a second proportion (P2) of the second component in the outer peripheral region (23).
S3: assembling the bipolar plates (30) on both sides of the membrane electrode assembly (10) and the sealing frame (20).

2. The method of claim 1, wherein
a transition region (22) is further provided between the inner peripheral region (21) and the outer peripheral region (23), and the first proportion (P1) gradually changes to the second proportion (P2) through the transition region.

3. The method of claim 1 or 2, wherein
the first component is silicone rubber, and the second component is selected from one or more of the following materials: ethylene-propylene-diene monomer rubber, polyethylene naphthalate, polyethylene terephthalate glycol, and polyimide; and/or
the first proportion (P1) is greater than the second proportion (P2).

4. The method of any of the preceding claims, wherein,
in step S2, the sealing material is injected from the inside to the outside of the sealing frame (20) in chronological order, and the proportion (P) between the first component and the second component of the sealing material changes with injection time.

5. The method of any of the preceding claims, wherein,
the bipolar plates (30) are provided with a bead structure (34), and the bead structure has protrusions relative to the main extension plane of the bipolar plates (30).

6. The method of claim 5, wherein
in step S2, the sealing frame (20) is configured to match the outer contour of the protrusions of the bead structure (34) at the corresponding positions.

7. The method of claim 5, wherein
the bead structure (34) is positioned at a location corresponding to the outer peripheral region (23) of the bipolar plates (30); and/or
at least one manifold (24) is provided in the outer peripheral region (23) of the sealing frame (20), and the bead structure (34) surrounds the manifold (24).

8. The method of any of the preceding claims, wherein,
the membrane electrode assembly (10) is composed of a gas diffusion layer (11), a catalyst layer (12), and a proton exchange membrane (13), and these components are cut to the same extended dimensions in step S1.

9. The method according to any one of the preceding claims, wherein
the sealing frame (20) is integrally formed using a two-component injection molding process.

10. A fuel cell (100) manufactured via the method according to any one of the preceding claims, comprising at least:
- a membrane electrode assembly (10);
- a sealing frame (20) surrounding the membrane electrode assembly (10), the sealing frame being formed by injection molding with a sealing material composed of a first component and a second component, and having an inner peripheral region (21) and an outer peripheral region (23); and
- bipolar plates (30) arranged on both sides of the membrane electrode assembly (10) and the package frame (20), wherein
the first component has a first proportion (P1) in the inner peripheral region (21) different from a second proportion (P2) of the second component in the outer peripheral region (23).
